# EUROPEAN PATENT APPLICATION

(11) **EP 2 098 989 A1**
(43) Date of publication of application: **09.09.2009**
(21) Application number: 08152463.9
(22) Date of filing: 07.03.2008
(51) Int. Cl.: G06T 5/00, G06T 7/00

(54) **Method for processing a coloured image.**

(71) Applicant: Nederlandse Organisatie voor toegepast-natuurwetenschappelijk onderzoek TNO, 2628 VK Delft (NL)
(72) Inventor: Dijk, Judith, 2497-AN, The Hague (NL)
(74) Representative: Hatzmann, Martin

(57) **Abstract**

Method for processing a coloured image, comprising grey tones and colour tones. The method comprises the steps of converting the coloured image into an e.g. upgraded grey tone image. One or more colour tone images are constituted by e.g. blue-yellow rated pixels, or red-green rated pixels, respectively. In the upgraded grey tone image, the presence and strength of relevant grey tone edges in the image is determined. Next, the edges determined in the upgraded grey tone image, are mapped into said coloured image or into said one or more colour tone images. Finally, the coloured image or one or more colour tone images are upgraded with an upgrading process, where this upgrading process depends on edges in the grey-tone image.

## Description

The present invention refers to a method for processing a coloured image or sequence of images.

Images may be stored in a computer in the form of a grid of picture elements called pixels, containing the image's colour and brightness or lightness information. Software image editors can change the pixels to enhance or upgrade the image in many ways. The pixels can be changed as a group, or individually, by the sophisticated algorithms within the image editors. Bitmap graphics editors are often used to alter photographs and other raster graphics. However, vector graphics software, such as Adobe Illustrator or Inkscape, are used to create and modify vector images, which are stored as descriptions of lines, Bézier splines, and text instead of pixels. Image editors may feature a number of algorithms which can add or remove noise in an image. Image compression artefacts can be removed; dust and scratches can be removed and an image can be de-speckled. Noise tends to invade images when pictures are taken in low light settings.

One aim of this invention is to enhance the quality of a coloured image or sequence of images, either displayed by means of e.g. a computer screen or the like or by means of a paper print etc., and in particular to present an improvement w.r.t. colour shift which may be caused by upgrading of e.g. noisy images taken in low light settings. This may occur when the colour planes in e.g. the RGB space are upgraded separately. Colour shift may be defined here as the phenomenon that individual coloured areas in the image tend to shift or mingle during e.g. an image noise reduction process.

The present invention is based on the understanding that, where a coloured image can be seen as being build up from a grey tone image, which could be called luminance or lightness image, and one or more colour tone images, which could be called chrominance images, the grey tone image is very suitable for image upgrading, e.g. by means of a process called "temporal noise reduction" or another suitable process. Based on the results of such upgrading process, a set of relevant edges can be determined in said upgraded grey-tone image. Using this set of relevant edges, the remaining colour tone images can be upgraded, however, guided by the edge information as resulting from the enhanced luminance or lightness image, viz. in such a way that in the process it is prevented that the colours in the chrominance images to be upgraded will smear across those edges.

In another wording, according to the present invention it is preferred that a method for processing a coloured image comprising grey tones and colour tones, comprises the steps of:
a. converting the coloured image into a grey tone image based on the image's luminance or lightness values, the grey tone image e.g. being upgraded by means of a "super resolution" or similar grey tone upgrading process, as well as one or more colour tone images, constituted by e.g. blue-yellow rated pixels or areas, or red-green rated pixels or areas, respectively;
b. determining, in the grey tone image, the presence of relevant grey tone edges in the image;
c. mapping those determined grey tone edges into said coloured image or into said one or more colour tone images;
d. upgrading the relevant colour images using an upgrading process under control of said grey tone edges.

Below the invention will be elucidated referencing to some attached figures. As the figures are not allowed to be in colour due to the patent regulations, the illustrative expressiveness of the figures are somewhat handicapped.
- Fig. 1: shows the grey tone version of a coloured image, constituted by black/white rated (grey tone) pixels;
- Fig. 2: shows an upgraded version of the grey tone image of fig. 1;
- Fig. 3: shows the relevant edges as derived from in the upgraded grey tone image shown in fig. 2
- Fig. 4: represents (in grey tone due to said patent regulations) a first colour tone image, constituted by blue-yellow rated pixels;
- Fig. 5: represents (also in grey tone due to said patent regulations), a second colour tone image, constituted by red-green rated pixels;
- Fig. 6: illustrates mapping of the edges, shown in figure 3, into the colour tone image shown in figure 4;
- Fig. 7: illustrates mapping of the edges, shown in figure 3, into the colour tone image shown in figure 5;
- Fig. 8: illustrates in a magnified section of figure 7, defining of processing areas at both sides of the relevant edge (without crossing the edge), which processing areas are subjected to an upgrading process, thus upgrading the relevant colour tone image.

Coloured images may be constituted by pixels having attributes w.r.t. to their luminance (lightness) and chrominance. Each pixel thus may be coded by a black/white rate (luminance value) e.g. between 0 and 256 and e.g. two chrominance values like a blue/yellow rate and a red/green rate both e.g. between 0 and 256 as well. Typical colour spaces are CIELAB, CIELUV, and CIEXYZ, where the chrominance values are a*, b* (CIELAB) u*, v* (CIELUV) and x, y (CIEXYZ) [see e.g. http://en.wikipedia.org/wiki/Lab_color_space].

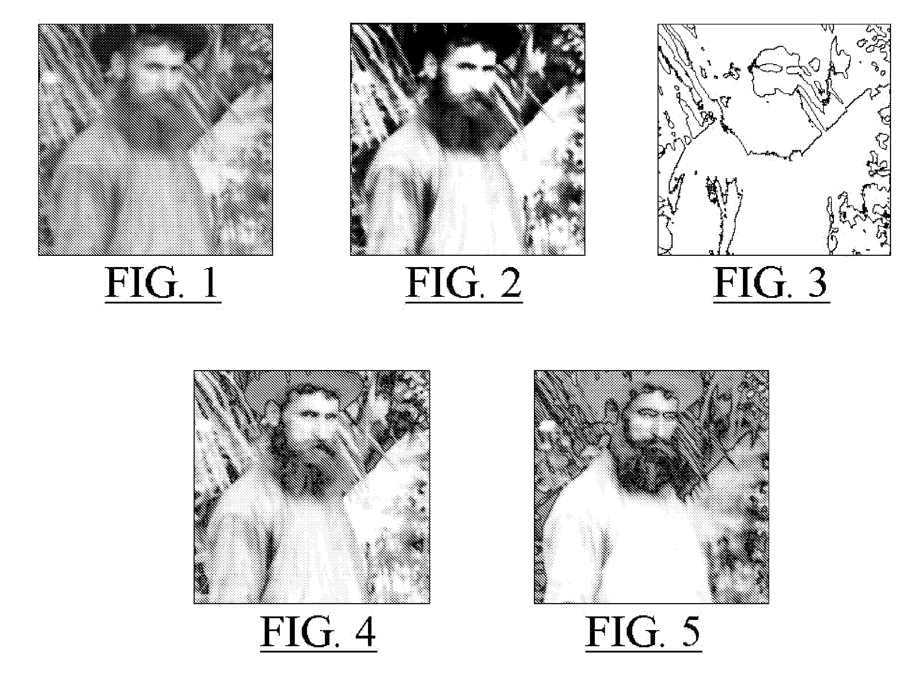

Fig. 1 shows the grey tone version of the coloured picture "Alleia Hamerops" made by Sergei Mikhailovich^{©}. This grey tone image, sometimes called luminance or lightness image, is constituted by the grey values of the pixels.

In either way, a coloured image, comprising grey tones and colour tones, and - due to the restrictions set by the allowability regulations for patent disclosures w.r.t. their illustrations - represented by the grey tone image of figure 1, is, according to the method presented in this patent application, converted into a "normal" grey tone image (shown in figure 1) and into an upgraded grey tone image, shown in figure 2. This upgraded image, just like the grey tone image in figure 1, is constituted by black/white rated pixels or areas, representing the image's luminance or lightness values. The upgraded image, however, aims to have better quality, due to a "super resolution", "noise reduction" or similar upgrading process. Super-resolution (SR), which may performed to both coloured and grey tone images, are techniques that in some way enhance the resolution of an imaging system. There are different views as to what is considered an SR-technique: some consider only techniques that break the diffraction-limit of systems, while others also consider techniques that merely break the limit of the digital imaging sensor as SR. There are both single-frame and multiple-frame variants of SR, where multiple-frame are the most useful. Algorithms can also be divided by their domain: frequency or space domain. By fusing together several low-resolution (LR) one enhanced-resolution image is formed.

Based on the outcome from the upgrading (e.g. SR) process, illustrated in figure 2, the upgraded grey tone image is subjected to a process for determining, in that upgraded grey tone image, the presence and strength of relevant grey tone edges in the image. Fig. 3 illustrates the most important edges, shown as well-defined black border lines (for this example use was made of the Edge Detection function of the software package Irfanview^{©}). For illustration purposes here only the presence, and not the strength of the edges are explicitly visualised.

Aim of the method of this invention to upgrade coloured images. Fig. 4 represents (again, in grey tone due to the patent regulations) a first colour tone image, constituted by blue-yellow rated pixels, while Fig. 5 represents a second colour tone image, constituted by red-green rated pixels. Both colour tone images define the chrominance (colour content) of the original coloured image. Other sets of colour tone images would be possible. The colour tone image may be the original colour tone image or may be subjected to an upgrading process.

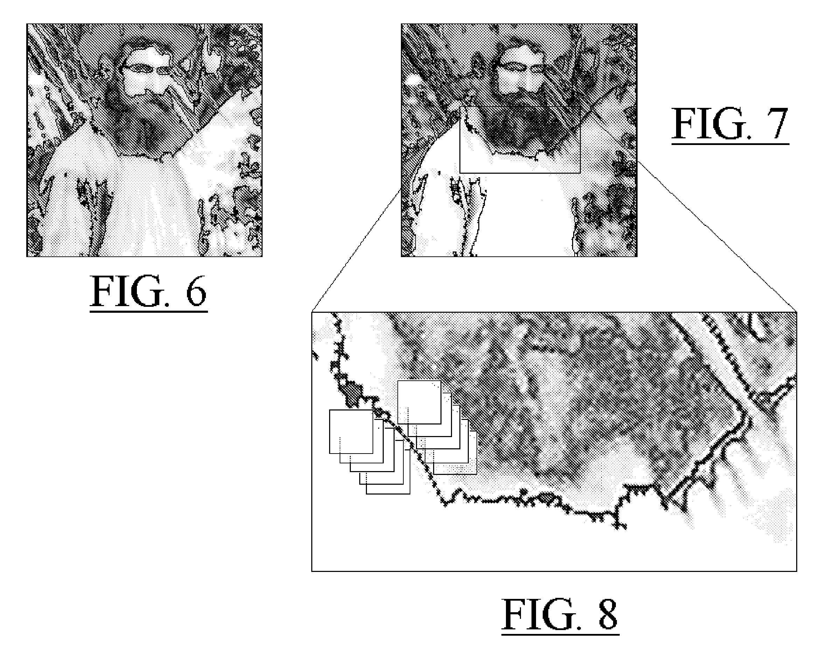

According to the novel method presented here, the edges, shown in figure 3, derived from the upgraded grey tone image, shown in figure 2, are mapped - by the relevant software, performing all these steps - either into the coloured image (not shown in colour, but represented by the half tone image of figure 1) or into the colour tone images, represented in the half tone images of figures 4 and 5, resulting in the images of the figures 6 and 7. Fig. 6 thus illustrates mapping of the edges, shown in figure 3, into the colour tone image shown in figure 4, while Fig. 7 illustrates mapping of the edges, shown in figure 3, into the colour tone image shown in figure 5.

Fig. 8 illustrates a magnified section of figure 7. Moving windows are guided over the image, a technique known as convolution. The processing area is subjected to an upgrading process. The upgrading process depends on the presence and strength of edges in the current window.
. In particular when a window (processing area) comprises much (chrominance) noise, e.g. due to (too) low light when the image was made (e.g. by photography or video), the quality of the image as a whole can substantially be improved by e.g. local (per processing area) filtering, performing statistical processes etc. The statistical process is steered by the presence and strength of the edges in the grey-tone image, that is, pixels that are similar to the current pixel are taken more into account than pixels that are less similar. This technique, when performed on a single image, is known as "edge-preserved filtering". Either, both colour tone images (figures 6 and 7) or the original coloured image (after the edges being mapped in it) are processed in this way. While, as illustrated in figure 8, colour shift or mingling will substantially be reduced or even excluded by the method according the present invention.

## Claims

1. Method for processing a coloured image or sequence of images, comprising grey tones and colour tones, the method comprising the steps of:
a. converting the coloured image into a grey tone image, based on the image's luminance or lightness values, as well as one or more colour tone images;
b. determining, in the grey tone image, the presence of relevant grey tone edges in the image;
c. mapping those determined grey tone edges into said coloured image or into said one or more colour tone images;
d. upgrading said coloured image or said one or more colour tone images using an upgrading process under control of said grey tone edges.

2. Method according to claim 1, wherein the grey tone image, mentioned in step a., is upgraded, while step b. is performed to the upgraded version of the grey tone image.

3. Method according to claim 1 or 2, wherein step b. comprises determining, in the grey tone image, both the presence and the strength of the relevant grey tone edges, both being used to control the upgrading process in step d.

4. System which is arranged to perform the method according to one or more preceding method claims.

5. Software means arranged to control and/or perform the method according to one or more preceding method claims.
